# EUROPEAN PATENT APPLICATION

(11) **EP 4 800 755 A1**
(43) Date of publication of application: **02.09.2026**
(21) Application number: 26160951.5
(22) Date of filing: 26.02.2026
(51) Int. Cl.: H01M 4/14, H01M 4/62

(54) **COMPOSITE COMPRISING CONDUCTIVE POLYMER AND LIGNOSULFONATE, AND ELECTRODE ACTIVE MATERIALS AND LEAD-ACID BATTERY COMPRISING THE SAME**

(30) Priority: 27.02.2025 US 202563764296 P
(71) Applicant: Trojan Battery Company LLC, Santa Fe Springs, CA 90670 (US)
(72) Inventor: MCGILLIVARY, Alex, Santa Fe Springs, 90670 (US); VERDE, Michael, Santa Fe Springs, 90670 (US)
(74) Representative: Ter Meer Steinmeister & Partner

(57) **Abstract**

A material composition, a lead-acid battery or battery assembly comprising the material composition, the methods of making the same, and the methods of using the same are provided. The material composition includes a composite, which includes an organic expander and a conductive polymer. The organic expander includes lignosulfonate (LS). The conductive polymer includes poly(3,4-ethylenedioxythiophene) (PEDOT). The composite is a molecular composite or nanocomposite, in which the organic expander and the conductive polymer are mixed at a molecular or nanometer scale. The material composition is a negative or positive active material for electrode.

## Description

### PRIORITY CLAIM AND CROSS-REFERENCE

This application claims the benefit of U.S. Provisional Application No. 63/764,296, filed February 27, 2025, which application is expressly incorporated by reference herein in its entirety.

### FIELD OF THE INVENTION

The disclosure relates to batteries generally. More particularly, the disclosed subject matter relates to material compositions comprising a composite, a lead-acid battery or a battery assembly comprising the same, and methods for making such a battery or battery assembly.

### BACKGROUND

Lead-acid batteries have many advantages such as low initial cost, mature manufacturing technology, good safety performance, and high recycling efficiency. However, when used in vehicles, a lead-acid battery is operated continuously in high-rate partial-state-of-charge (HRPSoC) mode, in which the active mass of batteries cannot be utilized sufficiently and the discharged product, PbSO₄, cannot be efficiently converted back to Pb resulting in progressive accumulation of irreversible PbSO4 on negative active material (NAM), and therefore, the cycle life of batteries is reduced. The accumulation of irreversible PbSO₄ is also called sulfation.

To address this problem, new types of lead-acid batteries of different designs are developed. In addition, different expanders or additives are included in the negative plates of lead-acid batteries. For examples, carbon black, active carbon and graphite are used in the negative plates to increase conductivity, decrease compaction, and then increase the HRPSoC cycle life. But the introduction of the additives such as carbon in the negative plates provides other limitations or issues, for example, acceleration of hydrogen evolution so as to increase pressure and loss of water in the batteries.

Better expanders and additives having higher efficiency are more desired for the negative plates. In addition to the modification of negative plates, additional approaches are needed to increase the HRPSoC cycle life.

### SUMMARY OF THE INVENTION

The present disclosure provides a material composition for lead-acid battery, a lead-acid battery or battery assembly comprising the material composition, the methods of making the same, and the method of using the same. The material composition comprises a material, which is a molecular or nanocomposite comprising an electrically conductive polymer including poly(3,4-ethylenedioxythiophene) (PEDOT) and lignosulfonate (LS). The material composition comprising the composite may be an active material for negative or positive electrode, used in a lead-acid battery.

In accordance with some embodiments, the present disclosure provides an active material for a lead-acid battery. The active material comprises a composite comprising an organic expander and a conductive polymer. The organic expander comprises lignosulfonate. The conductive polymer comprises PEDOT. The composite is a molecular composite or nanocomposite, in which the organic expander and the conductive polymer are mixed at a molecular or nanometer scale. The active material comprises a lead-containing chemical.

The active material may further comprise a binder comprising fibers or particles.

The active material may also comprise an acid in some embodiments.

In some embodiments, the lead-containing chemical comprises lead oxide. The fibers as the binder comprise glass fibers, polymer fibers, or a combination thereof.

In some embodiments, the binder may include particles, for example, polymer particles. For example, the polymer particles are polytetrafluoroethylene (PTFE).

The acid comprises sulfuric acid in some embodiments.

In some embodiments, the active material further comprises an inorganic expander, for example, a carbonaceous material selected from the group consisting of carbon black, active carbon, graphite, carbon nanotube, and any combination thereof. The carbonaceous material is optional. In some other embodiments, the active material includes no carbonaceous material, and with the composite used, no carbonaceous material is needed.

In some embodiments, the active material further comprises at least one additive. For example, the additive may comprise barium sulfate.

In some embodiments, the composite has a molar ratio of PEDOT to LS in a range of from 1:10 to 10:1. The composite has a dose in a range of from 0.01 % to 50 % by weight relative to 100 parts of lead-containing chemical such as PbO. The terms "dose" and "loading" used herein are interchangeable.

In some embodiments, the active material is a negative active material (NAM) for a negative electrode in a lead-acid battery.

In some embodiments, the active material is a positive active material (PAM) for a positive electrode in a lead-acid battery.

In another aspect, the present disclosure provides an active material for a lead-acid battery, comprising: a lead-containing chemical comprising lead oxide; a composite comprising an organic expander and a conductive polymer, wherein the organic expander comprises lignosulfonate (LS) and the conductive polymer comprises poly(3,4-ethylenedioxythiophene) (PEDOT), and the composite is a molecular composite or nanocomposite, in which the organic expander and the conductive polymer are mixed at a molecular or nanometer scale; an acid comprising sulfuric acid; and a binder, the binder comprising fibers selected from the group consisting of glass fibers, polymer fibers, and a combination thereof, wherein the active material is a negative active material (NAM) for a negative electrode in the lead-acid battery.

In another aspect, the present disclosure provides an active material for a lead-acid battery, comprising: a lead-containing chemical comprising lead oxide, a composite comprising an organic expander and a conductive polymer, wherein the organic expander comprises lignosulfonate (LS) and the conductive polymer comprises poly(3,4-ethylenedioxythiophene) (PEDOT), and the composite is a molecular composite or nanocomposite, in which the organic expander and the conductive polymer are mixed at a molecular or nanometer scale; and a binder, the binder comprising PTFE particles; wherein the active material is a positive active material (PAM) for a positive electrode in the lead-acid battery.

In some embodiments, the active material may further comprise a carbonaceous material.

In another aspect, the present disclosure provides an electrode for a lead-acid battery. The electrode comprises the active material comprising the composite material as described herein.

The present disclosure also provides a lead-acid battery comprising the active material as described herein. In some embodiments, the active material may be disposed in a current collector in a negative electrode. In some embodiments, the active material may be disposed on a positive electrode.

In another aspect, the present disclosure also provides a method for making the active material as described herein, a method of making the electrode as described herein, and a method of making the battery or battery assembly as described herein. The method of making the active material comprises a step of making the composite. The composite may be made by polymerizing a monomer for the conductive polymer in the presence of the organic expander in a solution. In some embodiments, the polymerization of the monomer is performed through chemical oxidation polymerization or electrochemical polymerization. The method may also comprise a step of mixing the resulting composite and other ingredients as described herein.

The lead-acid battery comprises an electrolyte, which is disposed between a negative electrode and a positive electrode. The negative electrode and the positive electrode may be in a form of plate.

The lead-acid battery may also comprise a separator, for example, a separator comprising a microporous polymeric material. The microporous polymeric material comprises a polymer. Examples of a suitable polymer include, but are not limited to, polyester, cellulose, polyvinyl chloride, a rubber, a polyolefin, and any combination thereof. The separator is disposed between a negative electrode and a positive electrode. The negative electrode and the positive electrode may be in a form of plate in a battery or battery assembly. The electrolyte is disposed inside the microporous polymeric material.

In accordance with some embodiments, the lead-acid battery described herein is rechargeable. Such a battery comprises a housing, and a plurality of cells disposed inside the housing. Each of the plurality of cells comprises a plurality of positive electrode plates and a plurality of negative electrode plates. The housing (or called case) may include cell dividers to accommodate the cells.

The composite material described herein increase conductivity and decrease compaction in a lead-acid battery, which provides excellent HRPSoC cycle life.

### BRIEF DESCRIPTION OF THE DRAWINGS

The present disclosure is best understood from the following detailed description when read in conjunction with the accompanying drawings. It is emphasized that, according to common practice, the various features of the drawings are not necessarily to scale. On the contrary, the dimensions of the various features are arbitrarily expanded or reduced for clarity. Like reference numerals denote like features throughout specification and drawings.
FIGS. 1A-1B show exemplary scanning electronic microscope (SEM) images of PEDOT powders at magnifications of 400 and 1,500 with the bar showing 100 microns and 30 microns, respectively.
FIGS. 2A-2B show exemplary SEM images of lignosulfonate (LS) powders at magnifications of 400 and 1,500 with the bar showing 100 microns and 30 microns, respectively.
FIGS. 3A-3B show exemplary SEM images of a composite powder of PEDOT/LS (2:1) at magnifications of 400 and 1,500 with the bar showing 100 microns and 30 microns, respectively.
FIGS. 4A-4B show exemplary SEM images of a composite powder of PEDOT/LS (1:2) at magnifications of 400 and 1,500 with the bar showing 100 microns and 30 microns, respectively.
FIG. 5 is a sectional view illustrating an exemplary testing apparatus for battery in accordance with some embodiments.
FIG. 6A is a magnified view of a tip of a negative electrode illustrated as a portion of FIG. 5.
FIG. 6B shows sectional images of an exemplary structure shown in FIG. 6B in exemplary negative electrodes.
FIG. 7 shows the charging results (charge capacity versus time) of negative active materials comprising LS, polyaniline (PANI), PANI plus LS (2:1), PANI/LS (2:1), PPY (polypyrrole)/LS (2:1), and PEDOT/LS (2:1), respectively, at a loading percentage of 0.3%.
FIG. 8 shows the charging results of negative active materials comprising LS at a loading percentage of 0.3%, PEDOT/LS (2:1) at a loading percentage of 0.3%, and PEDOT/LS (2:1) at a loading percentage of 0.9%, respectively.
FIG. 9 shows the charging results of negative active materials comprising high-density LS at a loading percentage of 0.3%, low-density LS at a loading percentage of 0.3%, low-density PEDOT/LS (2:1) at a loading percentage of 0.9%, low-density PEDOT/LS (2:1) at a loading percentage of 1.2%, and low-density PEDOT/LS (1:2) at a loading percentage of 0.6%, respectively.
FIG. 10 shows a testing profile in a charge current test including a 1C constant current discharge followed by 0.5 mV/s voltage sweep chargeback.
FIG. 11 shows the peak charge results of different samples including negative active materials comprising LS, polyaniline (PANI), PANI plus LS (2:1), PANI/LS (2:1), PPY (polypyrrole)/LS (2:1), and PEDOT/LS (2:1), respectively, at a loading percentage of 0.3%.
FIG. 12 shows the peak charge results of different samples including negative active materials comprising LS at a loading percentage of 0.3%, PEDOT/LS (2:1) at a loading percentage of 0.3%, and PEDOT/LS (2:1) at a loading percentage of 0.9%, respectively.
FIG. 13 shows the peak charge results of different samples including negative active materials comprising high-density LS at 0.3% loading, PEDOT/LS (2:1) at 0.9% loading, PEDOT/LS (2:1) at 1.2% loading, and PEDOT/LS (1:2) at 0.6% loading, respectively.
FIG. 14 shows the gassing testing results including both the peak charge current and the gassing current of the negative active materials comprising PEDOT/LS compared to carbon and LS.
FIG. 15 shows the peak charge current results of positive materials comprising PEDOT/LS as compared to the control sample.
FIG. 16 shows the discharging results of dry-pressed electrode with positive active materials comprising PbO₂, acetylene black at a loading percent of 10%, PTFE at a loading percent of 10%, and with or without PEDOT/LS (1:2) at a loading percent of 5%.
FIG. 17 is a flow chart showing an exemplary method for making a battery or battery assembly in accordance with some embodiments.

### DETAILED DESCRIPTION

This description of the exemplary embodiments is intended to be read in connection with the accompanying drawings, which are to be considered part of the entire written description. In the description, relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

For purposes of the description hereinafter, it is to be understood that the embodiments described below may assume alternative variations and embodiments. It is also to be understood that the specific articles, compositions, and/or processes described herein are exemplary and should not be considered as limiting.

In the present disclosure the singular forms "a," "an," and "the" include the plural reference, and reference to a particular numerical value includes at least that particular value, unless the context clearly indicates otherwise. When values are expressed as approximations, by use of the antecedent "about," it will be understood that the particular value forms another embodiment. As used herein, "about X" (where X is a numerical value) preferably refers to ±10% of the recited value, inclusive. For example, the phrase "about 8" preferably refers to a value of 7.2 to 8.8, inclusive. Where present, all ranges are inclusive and combinable. For example, when a range of "1 to 5" is recited, the recited range should be construed as including ranges "1 to 4", "1 to 3", "1-2", "1-2 & 4-5", "1-3 & 5", "2-5", and the like. In addition, when a list of alternatives is positively provided, such listing can be interpreted to mean that any of the alternatives may be excluded, e.g., by a negative limitation in the claims. For example, when a range of "1 to 5" is recited, the recited range may be construed as including situations whereby any of 1, 2, 3, 4, or 5 are negatively excluded; thus, a recitation of "1 to 5" may be construed as "1 and 3-5, but not 2", or simply "wherein 2 is not included." It is intended that any component, element, attribute, or step that is positively recited herein may be explicitly excluded in the claims, whether such components, elements, attributes, or steps are listed as alternatives or whether they are recited in isolation.

The term "substantially" used herein refers to a value with about 10% variation.

The term "electrode" used herein can be understood to encompass a negative electrode or a positive electrode. The electrode in a battery may be in a form of a plate. An electrode may be also referred as an electrode plate.

The terms "positive" and "negative" such as "positive electrode plates" and "negative electrode plates" used herein can be interchangeable. In the exemplary battery described herein, the "negative electrode plates" can be switched to the "positive electrode plates" and the "positive electrode plates" can be switched to the "negative electrode plates."

Unless indicated otherwise, the term "lead oxide" may be understood to encompass lead (II) oxide (PbO), lead (IV) oxide (PbO₂), or any combination thereof. In some embodiments, such an oxide may include Pb. Depending on the applications, a specific lead oxide may be selected. For example, in some negative active material compositions illustrated in the Examples, lead (II) oxide was used. In some positive active material compositions illustrated in the Examples, lead (IV) oxide was used.

A lead acid battery includes at least one cell having one or more positive electrodes and one or more negative electrodes. The electrodes may be in the form of plates. So, such a lead acid battery includes at least one cell having one or positive plates and one or more negative plates, which are made of lead or lead alloy plates. A lead oxide paste may be applied to the positive plates. A lead oxide paste with the addition of powdered sulfates may be applied to the negative plates. Porous separators can be used to stop the negative and positive plates touching each other but allow ions to move between them. A positive strap may be used to connect the positive plates together in each cell and a negative strap may be used to connect the negative plates together in each cell. A cell connector may be used to join the positive strap of one cell to the negative strap of the next cell. An electrolyte such as a solution or gel containing sulfuric acid is used to facilitate the electrochemical reactions between positive and negative plates in each cell.

The cells are enclosed in a case and covered with a lid. The case and the lid can be made of a plastic material such as polypropylene. Terminal posts are configured to connect the battery to an object such as an appliance, a device, or a circuit, where electricity is needed. The terminal posts carry the electrical current into the battery (charge) and from the battery (discharge).

A lead acid battery may also include a current collector (CC) inside each cell. The current collectors are bridging components that collect electrical current generated at the electrodes and connect with external circuits. The current-collectors may hold the active-materials on an electrode, the strap, and terminal posts.

The terms "strap," "strap structure," and "strap layout" used herein are understood to encompass a conductive structure disposed outside one or more cells and connected with tips of a plurality of anodes, or a plurality of cathodes, or a plurality of anodes and a plurality of cathodes together. For example, a positive strap is used to connect the tips of a plurality of positive electrodes together. A negative strap is used to connect the tips of a plurality of negative electrodes together. Each electrode may be a plate with one tip in some embodiments. Each of a positive strap and a negative stay may be casted in one piece and may have a notch on one side to fit with the tips of the electrodes. A strap, strap structure, or strap layout may be made of a suitable material such as lead, lead calcium tin, lead tin, or other lead alloys. A strap, strap structure, or strap layout may be considered as a portion of current collectors or referred as electrode current collectors. However, a strap, strap structure, or strap layout is different from a current collector used inside an electrochemical cell.

A lead-acid may also include a grid structure in some embodiments. The grid made of a lead or lead-alloy material is configured to hold the positive or negative active material within the grid structure, carrying the discharge current out of the active material and the recharge current back into the active material. The grid may hold the active material securely and resist the expansion forces produced during electrochemical reactions, for example, when the active material PbO₂ is converted to PbSO₄ in the positive grid and Pb to PbSO₄ in the negative grid.

Unless expressly indicated otherwise, the terms "battery" and "battery assembly" are used interchangeably, and the term "cell" used herein refers to an electrode group comprising a plurality of positive plates and a plurality of negative plates. The term "electrochemical cell" used herein refers to a subunit between a positive plate and a negative plate. For the convenience of description, the terms "cell" and "electrochemical cell" may be sometimes used interchangeably.

The present disclosure provides a material composition for lead-acid battery, a lead-acid battery or battery assembly comprising the material composition, the methods of making the same, and the method of using the same. The material composition comprises a material, which is a molecular or nanocomposite comprising an electrically conductive polymer including poly(3,4-ethylenedioxythiophene) (PEDOT) and lignosulfonate (LS). The material composition comprising the composite may be an active material for negative or positive electrode, or a combination thereof, used in a lead-acid battery.

In accordance with some embodiments, the present disclosure provides an active material for a lead-acid battery. The active material comprises a lead-containing chemical and a composite comprising an organic expander and a conductive polymer. The organic expander comprises lignosulfonate. The conductive polymer comprises PEDOT. The composite is a molecular composite or nanocomposite, in which the organic expander and the conductive polymer are mixed at a molecular or nanometer scale.

The active material may further comprise a binder comprising fibers or particles. In some embodiments, the active material may also include an acid.

In some embodiments, the lead-containing chemical comprises lead oxide. The fibers as the binder comprise glass fibers, polymer fibers, or a combination thereof.

In some embodiments, the binder may comprise particles, for example, polymer particles such as polytetrafluoroethylene (PTFE) particles.

The acid may comprise or is sulfuric acid.

In some embodiments, the active material further comprises an inorganic expander, for example, a carbonaceous material selected from the group consisting of carbon black, active carbon, graphite, carbon nanotube, and any combination thereof. The carbonaceous material is optional. In some other embodiments, the active material includes no carbonaceous material, and with the composite used, no carbonaceous material is needed.

In some embodiments, the active material further comprises at least one additive. For example, the additive may comprise barium sulfate.

In some embodiments, the composite has a molar ratio of PEDOT to LS in a range of from 1:10 to 10:1. The composite has a dose in a range of from 0.01 % to 5 % by weight relative to 100 parts of PbO.

In accordance with some embodiments, the lead-acid battery described herein is rechargeable. Such a battery comprises a housing, and a plurality of cells disposed inside the housing. Each of the plurality of cells comprises a plurality of positive electrode plates and a plurality of negative electrode plates. The housing (or called case) may include cell dividers to accommodate the cells.

The lead-acid battery or battery assembly in different embodiments is rechargeable. An exemplary battery comprises a housing (or called case), and a plurality of cells disposed inside the housing. The housing may include an exterior wall, a bottom wall, and cell dividers to divide the housing to accommodate the cells.

Each of the plurality of cells comprises a plurality of positive electrode plates and a plurality of negative electrode plates. Each respective electrode plate has a respective tip. A positive electrode plate includes a tip and a body portion. A negative electrode plate includes a tip and a body portion. A cell may include any suitable number of positive and negative electrode plates. A separator is disposed between a positive electrode plate and a negative electrode plate.

The positive plates and negative plates may be made of any suitable materials, which may be lead or lead alloy such as lead-tin-calcium-aluminum alloy. The separators may be absorbent glass absorbed mat including glass fibers. The housing and the cover for the battery may be made of a plastic such as acrylonitrile butadiene styrene (ABS) or polyolefins such as polypropylene.

The active material in the positive plates may be lead dioxide and that in the negative plates may be metallic sponge lead. When an electrical circuit is created, these materials react with sulfuric acid during charging and discharging according to a chemical reaction: PbO₂ + Pb +2 H₂SO4 = 2 PbSO₄ +2 H₂O. On the positive electrode plates and negative electrode plates, the following electrochemical reactions may occur:
Positive electrode: PbO₂ + SO₄²⁻ + 4 H⁺ + 2 e⁻ <--> PbSO₄ +2 H₂O,
Negative electrode: Pb + SO₄²⁻ <--> PbSO₄ + 2 e⁻.

Expanders are additives to reduce the degree of compaction within negative plates in a lead-acid battery and to provide more ionic transport channels within the plates during the charge/discharge process.

Lignosulfonate (LS), which contains sulfonate groups, is an expander providing a low degree of compaction of negative plate. However, LS itself may retard the conversion of PbSO₄ to Pb during the charging process, which can increase accumulation of PbSO₄ in the negative plate during cycling.

PEDOT is a conjugated polymer which is formed of 3,4-ethylenedioxythiophene (EDOT) monomers. PEDOT is a highly electrically conductive, electrochemically and thermally stable polymer.

The composite of PEDOT/LS as described herein are dispersed into each other at molecular or nanometer level. Such a composite includes the anionic sulfonic acid groups of the lignosulfonate acting as the counterions to the PEDOT cations.

The composite of PEDOT /LS can be synthesized by a process such as a chemical oxidation polymerization, an electrochemical polymerization, or a combination thereof. In a chemical oxidation polymerization process, EDOT monomers can be polymerized in the presence of lignosulfonate (LS) dissolved in a mixture. An initiator such as persulfate or iron (III) salt can be used to facilitate the polymerization. Electrochemical polymerization can be carried out by a galvanostatic technique in the presence of LS.

In some embodiments, the composite of PEDOT /LS is obtained by the chemical oxidation polymerization process. Lignosulfonate is dissolved into deionized water. Ammonium persulfate (APS) is used as oxidizing agent (or called initiator) at a suitable ratio. For example, the mole ratio of the oxidant to the lignosulfonate is in a range of from 1:1 to 9:1. The monomer EDOT is added to the mixture of APS/LS, while continuously stirred over a 72-hour period. The EDOT is polymerized in the presence of LS to form the PEDOT/LS composite. Once synthesized, the composite of PEDOT/LS is then centrifuged, rinsed with a solvent, and dried in vacuum. The solvent used is 3:20 acetone: methanol in the examples.

The EDOT and LS can be in any suitable ratio. For example, in some embodiments, the molar ratio range of EDOT to LS is in a range of from 1:10 - 10:1.

The PEDOT/LS composite obtained may be in a form of powder. The powder can be ground and added to an active material composition in a dry mixing stage.

In some embodiments, the composite of PEDOT/LS is synthesized via electrochemical polymerization. For example, in an exemplary procedure, EDOT is added to an alcohol / sulfuric acid solution with LS dissolved. The target electrode undergoes a positive potential during galvanostatic oxidation. EDOT is polymerized with LS acting as the stabilizing counterion, then deposits onto the surface of the target electrode. The target electrode may be a negative electrode or a positive electrode. In some embodiments, the target electrode is a negative electrode. In some other embodiments, the target electrode is a positive electrode. The PEDOT/LS composite is an electrolyte additive that allows it to electrochemically polymerize onto the positive electrode during formation.

As described herein, the PEDOT/LS composite acts as an expander, a conductive additive, or both. For example, it is used in an active material composition in some embodiments. The dose of the PEDOT/LS composite may be in a range of 0.01% to 50% by weight.

The molecular or nanocomposite comprising an electrically conductive polymer including poly(3,4-ethylenedioxythiophene) (PEDOT) and lignosulfonate (LS) as described herein may be used in an active material for negative or positive electrode, used in a lead-acid battery.

In some embodiments, powdered PEDOT/LS composite is included as a polymer additive in the active material used to define the positive or negative electrode paste. In some embodiments, the PEDOT/LS composite is a chemical oxidation synthesized polymer. In other embodiments, the PEDOT/LS composite is an electrochemically synthesized polymer. The polymer may be included with other raw materials and additives used within the paste mixing process and may be a direct constituent in the active materials. The polymer additive can be included in about 0.01% up to about 50%, for example, 0.01-20%, 0.01-10%, 0.01-5%, by weight in some embodiments. The conductivity, capacitance and surface area of the polymer additive regulate the rate of charge acceptance in the active material and the battery system. The batteries can be produced using conventional processes once the negative and positive electrode plates are made with paste using the polymer additive.

The paste preparation process for positive plates and negative plates results in particles of definite shape and composition. These particles are spread on the electrode grids, cured to interlock the particles into a porous mass, and converted electrochemically into active material to produce the electrode plates of the lead acid battery cell. The plates then have an active surface, definite porosity, and a hard active mass and connection to the grid. The porosity of the active materials is determined by the size of the paste particles.

Paste mixing may consist of two stages: dry mixing and wet mixing. The dry mixing mixes the dry lead oxide with positive paste additives or negative paste additives. The lead oxide may be composed of PbO and Pb produced by a ball milling or Barton milling process. The type and the content of additives depends on the specific formula used, which may differ between manufacture and application. After all ingredients have been uniformly mixed, a defined volume of water is added into the mixer to start the wet mixing process. When uniformity has been reached, a certain volume of sulfuric acid, with a defined specific gravity, may be added into the mixer to continue mixing until the final paste-like material has been achieved with a targeted paste density, viscosity, or other required properties. During the whole process, the amount of time spent on each step will be controlled, and peak temperature will be controlled as well.

In some embodiments, the polymer additive may be added in the paste mixing process. Further, in some embodiments, the polymer additive may be added into a paste mixer with lead oxide before dry mixing. Water may then be added to the dry mixture and the mixture may be wet-mixed for a certain amount of time. After wet-mixing, acid is added and mixing continues.

The paste may then be placed in a pasting machine, which will press the paste into the electrode grids respectively. The paste may be pressed into the empty space around the wires in the electrode grid respectively.

The active material described herein may be also dry-pressed onto an electrode. The active material composition may include the dry ingredient, but without a liquid such as an acid.

For example, in some embodiments, an active material for a lead-acid battery, comprises a lead-containing chemical comprising lead oxide, a composite comprising an organic expander and a conductive polymer such as the composite comprising LS and PEDOT as described herein, an acid comprising sulfuric acid, and a binder. The binder comprises fibers such as glass fibers, polymer fibers, or a combination thereof. The active material is a negative active material (NAM) for a negative electrode in the lead-acid battery. When the acid is included, the active material may be in the form of a paste. If the composition does not contain the acid, it may be a dry formulation, which can be applied onto an electrode by a suitable process such as pressing.

For another example, in some embodiments, an active material for a lead-acid battery comprises a lead-containing chemical comprising lead oxide, a composite comprising an organic expander and a conductive polymer such as the composite comprising LS and PEDOT as described herein, and a binder, for example, PTFE particles. The active material is a positive active material (PAM) for a positive electrode in the lead-acid battery. Such an active material may further comprise a carbonaceous material. Such a composition may be dry-pressed onto an electrode.

In another aspect, the present disclosure provides an electrode for a lead-acid battery. The electrode comprises the active material comprising the composite material as described herein. The present disclosure also provides a lead-acid battery comprising the active material as described herein. The active material is disposed in a current collector in a negative electrode. In some embodiments, the active material may be disposed on a positive electrode.

In some embodiments, the active material as described herein is a negative active material (NAM) for a negative electrode in the lead-acid battery. The active material is a negative paste, which is a paste used on a negative electrode.

In some embodiments, the active material as described herein is a positive active material (PAM) for a positive electrode in the lead-acid battery. The active material is a positive paste, which is a paste used on a positive electrode.

Based on the experimental results, a simple mixture of lignosulfonate and PEDOT does not work well for the applications described herein. The molecular or nanocomposite of PEDOT/LS provides an improvement by at least 50%.

Based on the experimental results, other electrically conductive polymers such as polyaniline and polypyrrole do not work well for the applications described herein. The polyaniline /LS and polypyrrole/LS are the control samples.

In some embodiments, the molecular or nanocomposite of PEDOT/LS can be used to replace carbon in the related compositions in a lead-acid battery. No carbon is used as one additive. The carbon or other carboneous material may be optional. In some other embodiments, a carboneous material may be included.

The lead-acid battery as described herein may comprise an electrolyte and/or a separator, which are disposed between a negative electrode and a positive electrode. The negative electrode and the positive electrode are in a form of plate. The separator may comprise a microporous polymeric material. Examples of a suitable polymer in the separator include, but are not limited to, polyester, cellulose, polyvinyl chloride, a rubber, a polyolefin, and any combination thereof. The electrolyte may be disposed inside the microporous polymeric material.

### EXAMPLES

### 1. Synthesis of PEDOT/LS Composite:

The composite of PEDOT /LS was synthesized via the chemical oxidation polymerization process. Lignosulfonate was dissolved into deionized water. Ammonium persulfate (APS) was used as oxidizing agent (or initiator) at a suitable ratio. For example, the mole ratio of the oxidant to the lignosulfonate was selected from the range of from 1:1 to 9:1. The monomer EDOT was added to the mixture of APS/LS, while continuously stirred over a 72-hour period. The molar ratio range of EDOT to LS was selected from the range of from 1:10 - 10:1. The EDOT was polymerized in the presence of LS to form the PEDOT/LS composite. Once synthesized, the composite of PEDOT/LS is then centrifuged, rinsed with a solvent such as 3:20 acetone: methanol, and dried in vacuum.

The PEDOT/LS composite obtained may be in a form of powder. The powder was ground and added to an active material composition in a dry mixing stage.

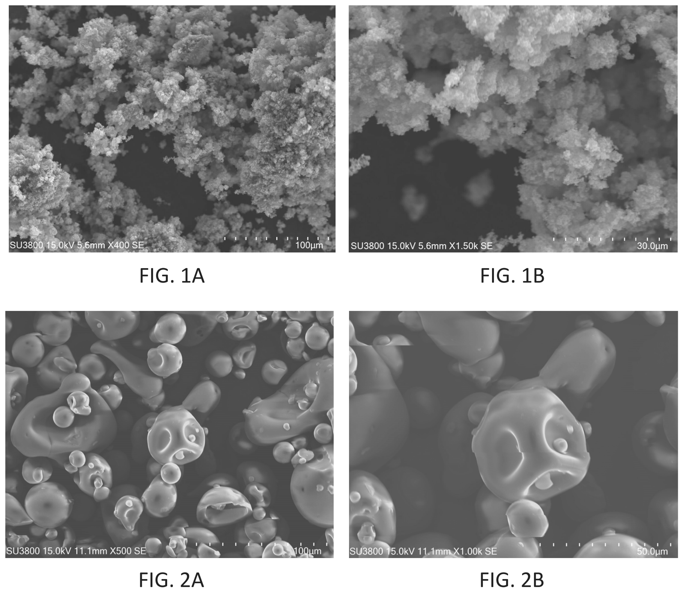

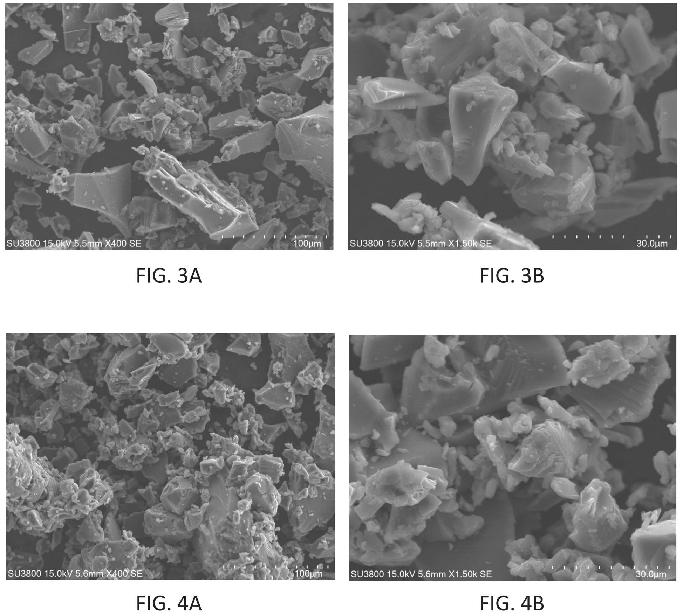

FIGS. 1A-1B show exemplary scanning electronic microscope (SEM) images of PEDOT powders. FIGS. 2A-2B show exemplary SEM images of lignosulfonate (LS) powders. FIGS. 3A-3B show exemplary SEM images of a composite powder of PEDOT/LS (2:1). FIGS. 4A-4B show exemplary SEM images of a composite powder of PEDOT/LS (1:2).

The PEDOT powder shows fluffy morphology, and the LS powder have spherical particle-like shapes. As a comparison, the PEDOT/LS composites show different particle shapes, which may include sharp edges, and such particles are crushed from uniform composite structures. The two materials in the PEDOT/LS are dissolved into each other and are ionically bonded with each other. The PEDOT/LS composite has a structure of a molecular composite or at least at the level of nanocomposite. The two materials are dispersed into each other at molecular or at least nanometer level.

The composites of PEDOT/LS are also described in a format of PEDOT:LS. The expression of PEDOT/LS is interchangeable with the expression of PEDOT:LS. The expression of PEDOT +LS refers to the mixture of PEDOT and LS powders.

### 2. PEDOT/LS Composite Used in Negative Active Material (NAM)

The PEDOT/LS composite powder was ground and added into the ingredients of the active material in a dry mixing stage.

The formulas for the NAM studies follow a same base formulation in the range depicted in Table 1. When the PEDOT/LS composites were used, the compositions made include PEDOT at the specified ratios. The organic expander and/or the conductive polymer such as lignosulfonate (LS) or PEDOT/LS is an independent variable in the experiments. Each ingredient other than lead oxide has a certain loading percentage, which is defined as the weight percentage relative to the weight of lead oxide. In another word, a loading percentage is defined as the content of a respective ingredient by part other than lead oxide relative to 100 parts of lead oxide by weight. The "acid (1.400 SG)" in the formulation tables refers to sulfuric acid with specific gravity of 1.4.

In the second phase of the experiments on the NAM studies, the base formula was changed to be less dense by adding 30% more water. These formulas are specified as Low Density versions., When the PEDOT/LS composites were used, the compositions made include PEDOT at the specified ratios.

**Table 1.**

| Ingredients | Loading (Parts per 100 parts of PbO) |
|---|---|
| Lead oxide | 100 |
| Water | 5-20 |
| Acid (1.400 SG) | 4-10 |
| Fiber | 0.1-2 |
| Carbon | 0-5 |
| Barium Sulfate | 0.1-5 |
| PEDOT/LS Composite | 0.01-8 (PEDOT/LS =1:10 to 10:1) |

The acid is sulfuric acid. The fibers may be polymer fibers. Carbon may have a suitable surface area such as 100-500 m²/g, measured by using BET. The barium sulfate has a suitable particle size, for example, d50 particle size in a range of from 0.5 micron to 2 microns. The terms of "loading" and "dose" used herein are interchangeable and are with respect to 100 parts of PbO.

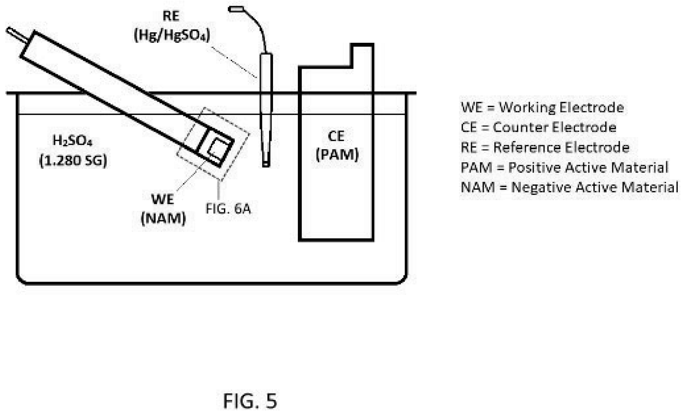

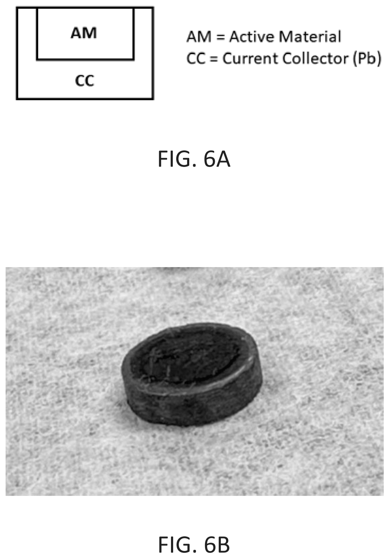

The compositions were evaluated as an active negative material in a negative electrode in the testing apparatus shown in FIG. 5. The testing apparatus was used to simulate a lead-acid battery. FIG. 6A is a magnified view of a tip of a negative electrode illustrated as a portion of FIG. 5. FIG. 6B shows sectional images of an exemplary structure shown in FIG. 6B in exemplary negative electrodes.

As shown in FIG. 5, a working electrode ("WE") is a negative electrode and has a tip comprising current collector ("CC") and an active material ("AM") embedded inside the current collector. The current collector is made of lead in some embodiments. This testing set-up is for illustration only. In some other embodiments, PEDOT:LS is in the positive electrode, the Working Electrode became the positive electrode and the Counter Electrode became the negative electrode.

As illustrated in FIGS. 6A-6B, the current collector may have a shape of a cup and the negative active material (NAM) is deposited inside the cup. The PEDOT /LS composite was incorporated into the active material paste inside the current collector.

The negative electrode was partially immersed in an acidic electrolyte comprising sulfuric acid, for example, sulfuric acid (1.280 SG). The counter electrode ("CE"), which is partially immersed in the electrolyte, comprises a positive active material (PAM). A reference electrode ("RE") was also partially immersed in the electrolyte. The reference electrode was an electrode comprising Hg/HgSO₄. The electrodes were electrically connected and the connections are not shown in FIG. 5.

Three types of electrochemical tests performed include: a cycling test, a charge rate test, and a gassing testing as described herein.

In the cycling test, ten cycles of discharge and charge were conducted. The discharge was at a rate of C/2, and the charge was at a rate of C/10 up to 2.45V until 140% chargeback or the 20-hour time limit. The key performance indicator is the time to chargeback (0-100%). Because of the hydrogen gassing side reaction, charging back exactly 100% of the coulombs discharged will not be sufficient to recover 100% of the discharged active material. So overcharging is necessary to ensure as much of the active material is recovered as possible. In the test, 140% is an upper limit, chosen to prevent the active material from producing excessive amounts of gas in the event that it charges faster than 20 hours.

In the charge rate test, an initial discharge was conducted at a rate of 1C, followed by a chargeback with a voltage scan at a rate of 0.5 mV/s. The key performance indicator in the charge rate test is the peak charge acceptance, which is calculated by dividing the peak charge current by the capacity obtained during the 1C discharge.

In the gassing test, from a full state-of-charge, voltage was scanned from OCV (open circuit voltage) to -1.5V (vs. Hg/HgSO4) at a rate of 0.1 mV/s. The key performance indicator is the current at -1.5V.

The compositions of the first series tested include: (1) with 0.3% loading of LS, polyaniline (PANI), PANI + LS (2:1); PANI/LS (2:1), polypyrrole (PPY)/LS (2:1), PEDOT/LS (2:1), respectively; and (2) with 0.9% loading of PEDOT/LS (2:1). The composition with "PANI + LS (2:1)" represents the active material composition including powders of PANI and LS separately mixed together at a weight ratio of 2:1. In the composition with PANI/LS (2:1), the PANI and LS are synthesized through polymerization of the monomer ANI in a solution with LS dissolved to obtain a composite of PANI/LS with a ratio of 2:1 by weight. Similarly, in the composition with PEDOT/LS (2:1), the PEDOT and LS are synthesized through polymerization of the monomer EDOT in a solution including LS to obtain the composite of PEDOT/LS as described herein.

Based on the formulation shown in Table 2, the compositions of the second series tested had a reduced paste density and include: PEDOT/LS (2:1) at 0.9% loading, PEDOT:LS (2:1) at 1.2% loading, and PEDOT/LS (1:2) at 0.6% loading. The control was with LS but without PEDOT.

In addition, at least one composition with PEDOT/LS (2:1) at 0.9% loading but without carbon was evaluated as a negative active material.

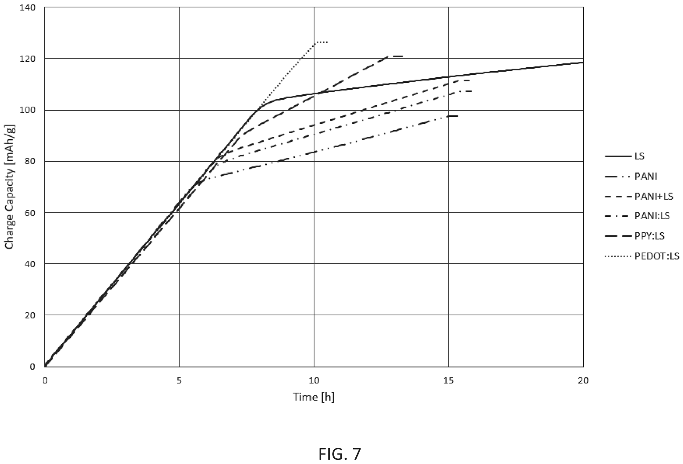

FIG. 7 shows the charging results (charge capacity versus time) of negative active materials comprising LS, polyaniline (PANI), PANI plus LS (2:1), PANI/LS (2:1), PPY (polypyrrole)/LS (2:1), and PEDOT/LS (2:1), respectively, at a loading percentage of 0.3%. As described above, the cycling test was performed with chargeback with 140% overcharge or the 20-hour time limit. The results of the time for chargeback 0-100% state of charge (SOC) are summarized in Table 2.

**Table 2**

| Charging Time for 0-100% SoC (C/10 to 2.45V until 140% chargeback or 20-hr time) | | | | |
|---|---|---|---|---|
| Expander | CP:LS Ratio | % Loading | Paste Density [High/Low] | Charge Time [h] |
| LS | --- | 0.3% | High | 20.01 |
| PANI | --- | 0.3% | High | 15.08 |
| PANI+LS | 2:1 | 0.3% | High | 15.53 |
| PANI:LS | 2:1 | 0.3% | High | 15.60 |
| PPY:LS | 2:1 | 0.3% | High | 12.83 |
| PEDOT:LS | 2:1 | 0.3% | High | 10.20 |

All cells gain capacity at a constant rate during the constant current step. Once the voltage limit is reached and the voltage is held, the rates of charging deviate. The cell with LS has a very low current, which causes the 20-hr time limit to be the end condition. All the conductive polymer formulas maintain a higher current to where the charge limit of 140% is reached. The formulation with the PEDOT/LS composite is the formula that takes the least time to charge; it reaches its end condition soon after entering the constant voltage step and maintains a high current during that time. These results differentiate PEDOT/LS from the PANI/LS and the PPY/LS as being able to charge faster. Therefore, PEDOT is the conductive polymer used in the present disclosure.

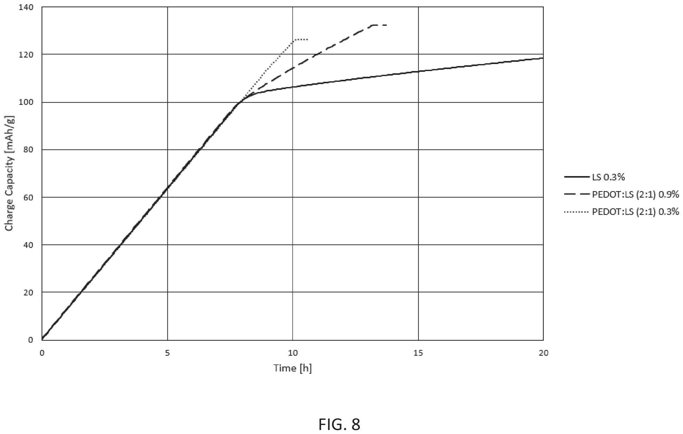

FIG. 8 shows the charging results of negative active materials comprising LS at a loading percentage of 0.3%, PEDOT/LS (2:1) at a loading percentage of 0.3%, and PEDOT/LS (2:1) at a loading percentage of 0.9%, respectively. Table 3 summarizes the results of the time for chargeback 0-100% state of charge (SOC) for these samples.

**Table 3.**

| Charging Time for 0-100% SoC (C/10 to 2.45V until 140% chargeback or 20-hr time) | | | | |
|---|---|---|---|---|
| Expander | CP:LS Ratio | % Loading | Paste Density [High/Low] | Charge Time [h] |
| LS | --- | 0.3% | High | 20.01 |
| PEDOT:LS | 2:1 | 0.3% | High | 10.20 |
| PEDOT:LS | 2:1 | 0.9% | High | 13.35 |

As shown in Table 3, increasing the loading percentage of PEDOT:LS by three times led to a slower charging and a longer charging time, even though it charging is still much faster than the control with LS only. The charge capacity increased as a result of the increased loading of PEDOT/LS.

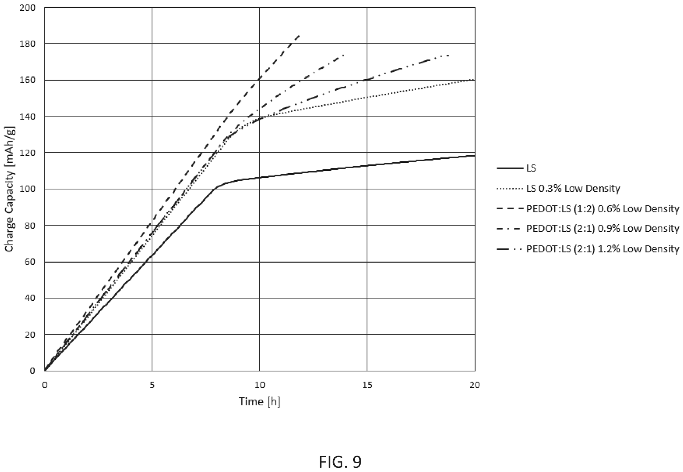

FIG. 9 shows the charging results of negative active materials comprising high-density LS at a loading percentage of 0.3%, low-density LS at a loading percentage of 0.3%, low-density PEDOT/LS (2:1) at a loading percentage of 0.9%, low-density PEDOT/LS (2:1) at a loading percentage of 1.2%, and low-density PEDOT/LS (1:2) at a loading percentage of 0.6%, respectively. Table 4 summarizes the results of the time for chargeback 0-100% state of charge (SOC) for these samples.

**Table 4**

| Charging Time for 0-100% SoC (C/10 to 2.45V until 140% chargeback or 20-hr time) | | | | |
|---|---|---|---|---|
| Expander | CP:LS Ratio | % Loading | Paste Density [High/Low] | Charge Time [h] |
| LS | --- | 0.3% | High | 20.01 |
| LS | --- | 0.3% | Low | 20.05 |
| PEDOT:LS | 2:1 | 0.9% | Low | 13.97 |
| PEDOT:LS | 2:1 | 1.2% | Low | 18.62 |
| PEDOT:LS | 1:2 | 0.6% | Low | 11.87 |

As shown in Table 4, the reduced density pastes systematically led to higher capacities. The rate of charging during the constant current step also went up due to the decreasing mass of material in the cell. The 1:2 ratio of PEDOT:LS charged the fastest among these lower density formulas.

Table 5 summarizes the results described in Tables 2-4.

**Table 5**

| Charging Times 0-100% SoC (C/10 to 2.45V until 140% chargeback or 20-hr time) | | | | |
|---|---|---|---|---|
| Expander | CP:LS Ratio | % Loading | Paste Density [High/Low] | Charge Time [h] |
| LS | --- | 0.3% | High | 20.01 |
| PANI | --- | 0.3% | High | 15.08 |
| PANI+LS | 2:1 | 0.3% | High | 15.53 |
| PANI:LS | 2:1 | 0.3% | High | 15.60 |
| PPY:LS | 2:1 | 0.3% | High | 12.83 |
| PEDOT:LS | 2:1 | 0.3% | High | 10.20 |
| PEDOT:LS | 2:1 | 0.9% | High | 13.35 |
| LS | --- | 0.3% | Low | 20.05 |
| PEDOT:LS | 2:1 | 0.9% | Low | 13.97 |
| PEDOT:LS | 2:1 | 1.2% | Low | 18.62 |
| PEDOT:LS | 1:2 | 0.6% | Low | 11.87 |

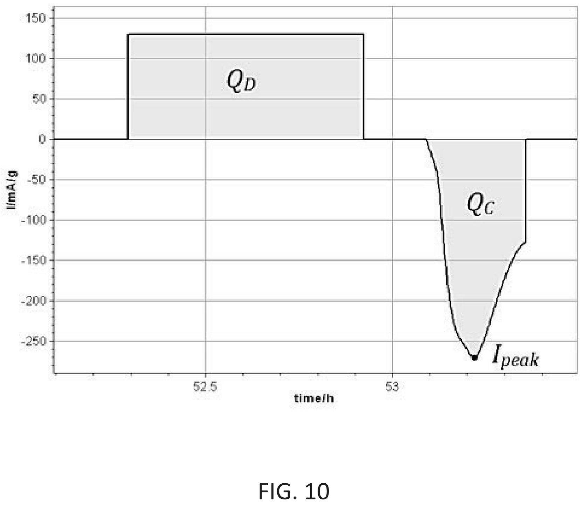

FIG. 10 shows a testing profile in a charge rate test including a 1C constant current discharge followed by 0.5 mV/s voltage sweep chargeback. Q_{D} is the amount of capacity in the discharge, and Qc is the amount of capacity in the charging process. Peak charge acceptance (CA) is calculated using the following equation: $CA = \frac{\left|{I}_{peak}\right|}{{Q}_{D}} {\left[\frac{A}{Ah}\right]}_{20}$

Iₚₑₐₖ is the peak charge current (in units of amps), and CA (peak charge acceptance) is the peak charge current normalized to the capacity of the previous discharge (in units of amps divided by amp-hours, A/Ah).

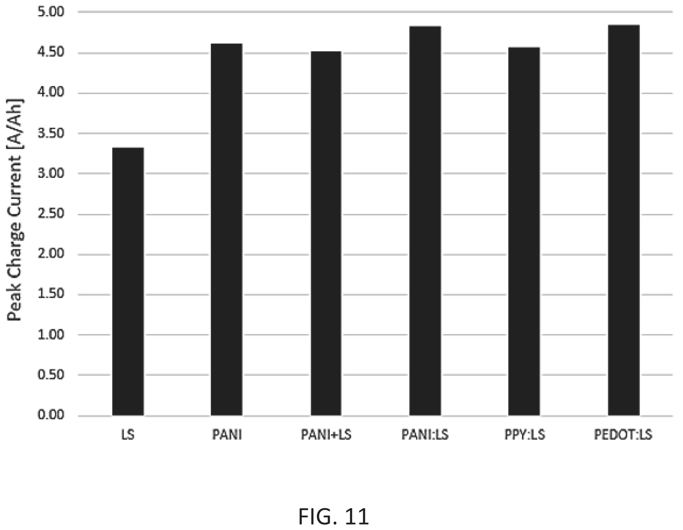

FIG. 11 shows the peak charge acceptance results of different samples including negative active materials comprising LS, polyaniline (PANI), PANI plus LS (2:1), PANI/LS (2:1), PPY (polypyrrole)/LS (2:1), and PEDOT/LS (2:1), respectively, at a loading percentage of 0.3%. The results are also summarized in Table 6.

**Table 6.**

| Peak Charge Acceptance (during 0.5 mV/s scan rate) | | | | |
|---|---|---|---|---|
| Expander | CP:LS Ratio | % Loading | Paste Density [High/Low] | Peak Current [A/Ah] |
| LS | --- | 0.3% | High | 3.32 |
| PANI | --- | 0.3% | High | 4.61 |
| PANI+LS | 2:1 | 0.3% | High | 4.52 |
| PANI:LS | 2:1 | 0.3% | High | 4.83 |
| PPY:LS | 2:1 | 0.3% | High | 4.56 |
| PEDOT:LS | 2:1 | 0.3% | High | 4.84 |

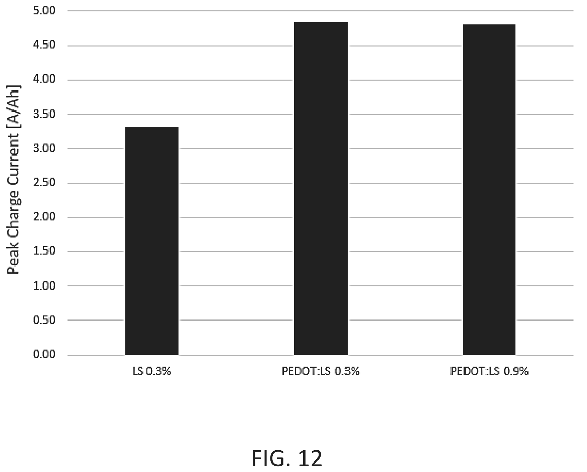

FIG. 12 shows the peak charge acceptance results of different samples including negative active materials comprising LS at a loading percentage of 0.3%, PEDOT/LS (2:1) at a loading percentage of 0.3%, and PEDOT/LS (2:1) at a loading percentage of 0.9%, respectively. The results of these samples are also summarized in Table 7.

**Table 7**

| Peak Charge Acceptance (during 0.5 mV/s scan rate) | | | | |
|---|---|---|---|---|
| Expander | CP:LS Ratio | % Loading | Paste Density [High/Low] | Peak Current [A/Ah] |
| LS | --- | 0.3% | High | 3.32 |
| PEDOT:LS | 2:1 | 0.3% | High | 4.84 |
| PEDOT:LS | 2:1 | 0.9% | High | 4.81 |

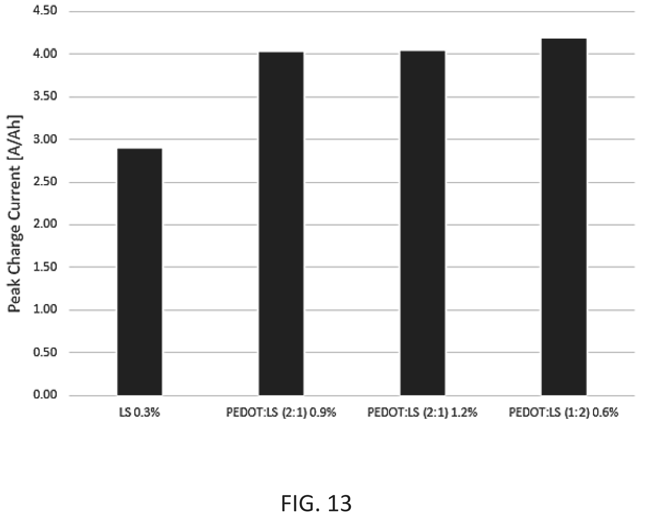

FIG. 13 shows the peak charge acceptance results of different samples including negative active materials comprising high-density LS at 0.3% loading, PEDOT/LS (2:1) at 0.9% loading, PEDOT/LS (2:1) at 1.2% loading, and PEDOT/LS (1:2) at 0.6% loading, respectively. The results of these samples are also summarized in Table 8.

**Table 8**

| Peak Charge Acceptance (during 0.5 mV/s scan rate) | | | | |
|---|---|---|---|---|
| Expander | CP:LS Ratio | % Loading | Paste Density [High/Low] | Peak Current [A/Ah] |
| LS | --- | 0.3% | Low | 2.90 |
| PEDOT:LS | 2:1 | 0.9% | Low | 4.02 |
| PEDOT:LS | 2:1 | 1.2% | Low | 4.04 |
| PEDOT:LS | 1:2 | 0.6% | Low | 4.18 |

The results described in Tables 6-9 are also summarized in Table 9.

**Table 9.**

| Peak Charge Acceptance (during 0.5 mV/s scan rate) | | | | |
|---|---|---|---|---|
| Expander | CP:LS Ratio | % Loading | Paste Density [High/Low] | Peak Current [A/Ah] |
| LS | --- | 0.3% | High | 3.32 |
| PANI | --- | 0.3% | High | 4.61 |
| PANI+LS | 2:1 | 0.3% | High | 4.52 |
| PANI:LS | 2:1 | 0.3% | High | 4.83 |
| PPY:LS | 2:1 | 0.3% | High | 4.56 |
| PEDOT:LS | 2:1 | 0.3% | High | 4.84 |
| PEDOT:LS | 2:1 | 0.9% | High | 4.81 |
| LS | - | 0.3% | Low | 2.90 |
| PEDOT:LS | 2:1 | 0.9% | Low | 4.02 |
| PEDOT:LS | 2:1 | 1.2% | Low | 4.04 |
| PEDOT:LS | 1:2 | 0.6% | Low | 4.18 |

As shown Tables 6-9 and FIGS. 11-13, all conductive polymer containing formulas showed a significantly larger peak charge acceptance. The PEDOT/LS composite again showed the strongest performance at the 0.3% loading. Increasing loading to 0.9% barely changed the peak. The composite of PEDOT:LS at the 1:2 ratio again showed the best charging performance amongst the lower density formulas. The mixture of PANI+LS showed a lower peak current than PANI:LS, providing evidence that the material synthesized as a composite is different than simply combining the individual materials during the dry mixing step.

The PEDOT/LS composite is suitable as substitute for carbon and/or lignosulfonate in the negative active materials (NAM) in lead-acid batteries.

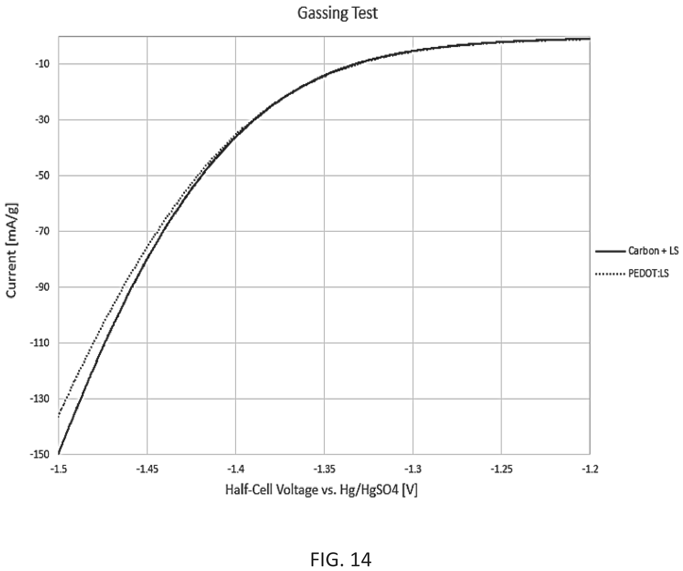

FIG. 14 shows the differences in the gassing current of the negative active materials comprising PEDOT/LS compared to carbon and LS. The results showed a simultaneous increase in charge rate and decrease in hydrogen evolution when the PEDOT/LS composite is used. For example, for the gassing current @ -1.5V, the sample with carbon + LS showed a gassing current of 150 mA/g, while the sample with PEDOT:LS (without carbon) showed a gassing current of 135 mA/g. The PEDOT:LS with no carbon formula was in a 2:1 ratio at 0.9% loading. In addition, the sample having carbon + LS showed a peak charge acceptance of 2.90 A/Ah, and the sample with PEDOT:LS (without carbon) showed a peak charge acceptance of 3.97 A/Ah, while the charge acceptance results are not shown in FIG. 14.

### 3. PEDOT/LS Composite Used in Positive Active Material (PAM)

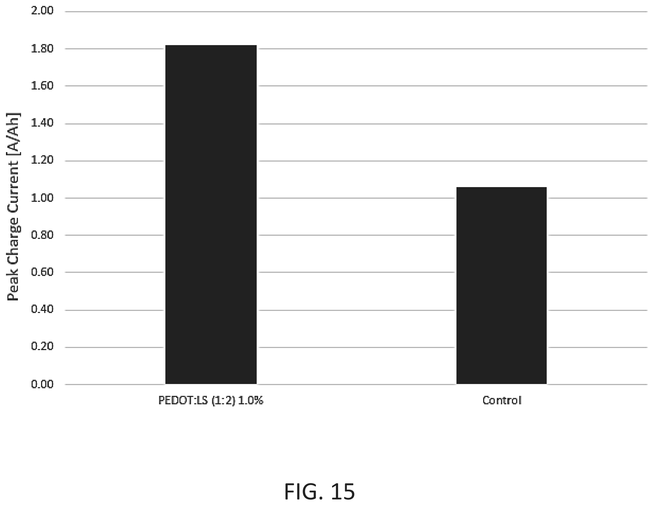

The PEDOT/LS composite was also evaluated as an additive in positive active material (PAM) using the methods described above with respect to the negative active material (NAM). A composition having PEDOT/LS (1:2) at 1.0% loading was evaluated as a PAM, which is used in a positive electrode. FIG. 15 shows the peak charge acceptance results of positive materials comprising PEDOT/LS as compared to the control sample. The control showed a peak charge acceptance of 1.06 A/Ah. However, the sample with the PEDOT/LS composite (1:2) at 1.0% loading showed a peak charge acceptance of 1.82 A/Ah. These results show that adding PEDOT:LS in the 1:2 ratio to the PAM formula dramatically increased the peak charge acceptance observed during a voltage scan. The PAM formulation also contains lead oxide, fiber (binder), water, barium sulfate, sulfuric acid, and optionally carbon. Such a PAM formulation may be a paste, which is applied onto the electrode.

In addition to the PAM formulation in paste form, the dry-processed PAM formulation was also prepared.

An active material comprising β-PbO₂, acetylene black at a loading percent of 10%, PTFE at a loading percent of 10%, and PEDOT/LS (1:2) at a loading percent of 5% was made through dry pressing onto electrode, and evaluated for use as a positive active material. Such dry-pressed positive active material (PAM) was compared to a control sample, which includes β-PbO₂, acetylene black at a loading percent of 10%, PTFE at a loading percent of 10%, and without PEDOT/LS. Acetylene black is a high-purity, electrically, and thermally conductive form of carbon black produced by the thermal decomposition of acetylene gas. Mass percentages, i.e., the loading percentages, are relative to the loading of PbO₂. The PEDOT/LS composite was used in the PAM in a dry-processed electrode format.

For the sample and the control, the ingredients were mixed with mortar and pestle, and then applied onto a lead working Electrode via spatula as a thin film. Approximately 10 mg of active material was applied.

When the PEDOT/LS composite is used in PAM, the desired dose range of PEDOT/LS is in a range of from 0.01% to 50%, related to the loading of PbO₂ by weight. This dose range applies to when it is used in a dry-processed electrode format.

The sample and the control were evaluated using the apparatus as illustrated in FIG. 5. A working electrode was assembled with a Pb counter electrode and a Hg/HgSO₄ reference electrode, submerged in 1.240 SG sulfuric acid electrolyte. A cycling protocol included a constant (66 mA/g) discharge current to 0.75 V versus Hg/HgSO₄ and then a constant (66 mA/g) charge current until 224 mAh/g charged. Such a process is repeated for 40 cycles. One key performance indicator is specific capacity at 40^{th} cycle, which was a selected threshold. Such a selected threshold may be longer than 40 cycles.

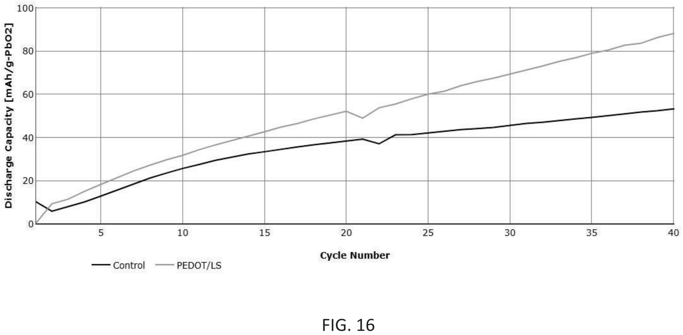

FIG. 16 shows the discharging results of dry-pressed electrode with positive active materials comprising PbO₂, acetylene black at a loading percent of 10%, PTFE at a loading percent of 10%, and with or without PEDOT/LS (1:2) at a loading percent of 5%.

As shown in FIG. 16, after 40 cycles of charging and discharging, the capacity growth was more pronounced for the PEDOT/LS composite, compared to the control without the PEDOT/LS composite. The capacity after 40 cycles is 54.3 mAh/g and the sample comprising PEDOT/LS: 90.4 mAh/g, respectively.

FIG. 16 shows a separate experiment that uses a "dry-processed" electrode with PbO₂ as a starting material. PbO₂ powder was mixed with a conductive carbon and PTFE binder. The synthesized PEDOT:LS composite was added into the mixture of the PbO₂ powder, the conductive carbon, and the PTFE binder. The sample shown in FIG. 16 was different from the sample shown in FIG. 15.

In another aspect, the present disclosure also provides a method for making the active material, a method of making the electrode, and a method of making the battery or battery assembly. The method of making the active material comprises a step of making the composite. The composite may be made by polymerizing a monomer for the conductive polymer in the presence of the organic expander in a solution. The polymerization of the monomer is performed through chemical oxidation polymerization or electrochemical polymerization. The method may also comprise a step of mixing the resulting composite and other ingredients as described herein.

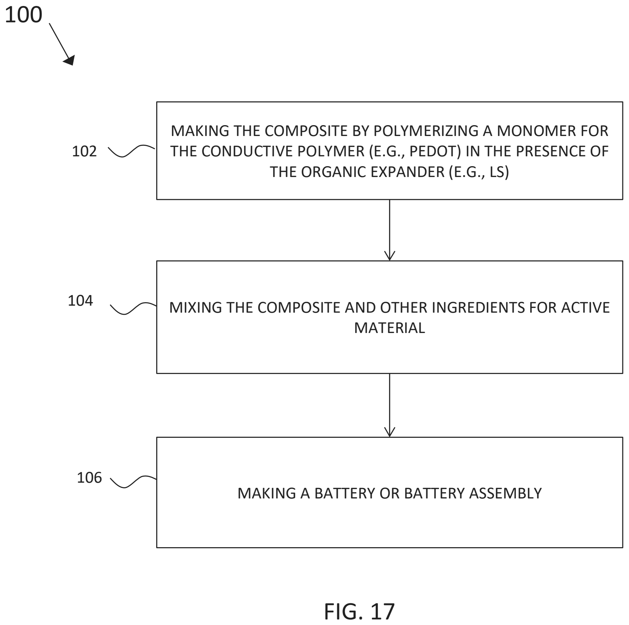

FIG. 17 is a flow chart showing an exemplary method 100 for making a battery or battery assembly in accordance with some embodiments. This is a general method applicable to any of the methods described above. The method 100 comprises at least three steps 102, 104, and 106.

At step 104, the composite is made by polymerizing a respective monomer such as EDOT for the conductive polymer such as PEDOT in the presence of the organic expander such as LS. The polymerization is performed through chemical oxidation polymerization or electrochemical polymerization as described herein. The LS and the monomer can be dissolved in a solution first. Through the polymerization, the composite dispersed at molecular or nanometer level can be achieved.

At step 104, the composite such as the PEDOT/LS composite as a powder is mixed with other ingredients for an active material.

At step 106, the active material is used to make a lead-acid battery or battery assembly.

The composite material described herein increase conductivity and decrease compaction in a lead-acid battery, which provides excellent HRPSoC cycle life. The resulting battery or battery assembly can be used for a vehicle, a golf cart, or any other applications. The battery may be rechargeable.

Although the subject matter has been described in terms of exemplary embodiments, it is not limited thereto. Rather, the appended claims should be construed broadly, to include other variants and embodiments, which may be made by those skilled in the art.

## Claims

1. An active material for a lead-acid battery, comprising:
a lead-containing chemical;
a composite comprising an organic expander and a conductive polymer, wherein the organic expander comprises lignosulfonate (LS) and the conductive polymer comprises poly(3,4-ethylenedioxythiophene) (PEDOT), and the composite is a molecular composite or nanocomposite, in which the organic expander and the conductive polymer are mixed at a molecular or nanometer scale; and
a binder, the binder comprising fibers or particles.

2. The active material of claim 1, wherein the lead-containing chemical comprises lead oxide.

3. The active material of any one of the preceding claims, wherein the fibers comprise glass fibers, polymer fibers, or a combination thereof.

4. The active material of any one of the preceding claims, wherein the particles in the binders are polymer particles, preferably wherein the polymer particles are polytetrafluoroethylene (PTFE).

5. The active material of any one of the preceding claims, further comprising an inorganic expander, wherein the inorganic expander comprises a carbonaceous material selected from the group consisting of carbon black, active carbon, graphite, carbon nanotube, and any combination thereof.

6. The active material of any one of the preceding claims, further comprising an additive, preferably wherein the additive comprises barium sulfate.

7. The active material of any one of claims 1 to 4, wherein the active material includes no carbonaceous material.

8. The active material of any one of the preceding claims, further comprising an acid, preferably wherein the acid comprises sulfuric acid.

9. The active material of any one of the preceding claims, wherein the composite has a molar ratio of PEDOT to LS in a range of from 1:10 to 10:1; and/or wherein the composite has a dose in a range of from 0.01 % to 50 % relative to 100 parts of the lead-containing chemical.

10. The active material of any one of the preceding claims, wherein the active material is a negative active material (NAM) for a negative electrode in the lead-acid battery; or wherein the active material is a positive active material (PAM) for a positive electrode in the lead-acid battery.

11. An electrode for a lead-acid battery, comprising the active material of any one of the preceding claims.

12. A lead-acid battery, comprising the active material of any one of claims 1 to 10.

13. The lead-acid battery of claim 12, wherein the active material is disposed in a current collector in a negative electrode; or wherein the active material is disposed on a positive electrode.

14. A method for making the active material of any one of claims 1 to 10, comprising a step of making the composite by polymerizing a monomer for the conductive polymer in the presence of the organic expander in a solution.

15. The method of claim 14, wherein the polymerization of the monomer is performed through chemical oxidation polymerization or electrochemical polymerization.
